(19) Europäisches Patentamt
European Patent Office
Office européen des brevets

(11) **EP 2 229 307 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(21) Anmeldenummer: **08869878.2**

(22) Anmeldetag: **26.11.2008**

(51) Int Cl.:
***B62D 5/04*** (2006.01)          ***H02H 7/08*** (2006.01)
***H03K 17/08*** (2006.01)

(86) Internationale Anmeldenummer:
**PCT/EP2008/066193**

(87) Internationale Veröffentlichungsnummer:
**WO 2009/086990 (16.07.2009 Gazette 2009/29)**

(54) **VERFAHREN ZUR DETEKTION EINER THERMISCHEN ÜBERLASTSITUATION BEI EINEM ELEKTROHANDWERKZEUG**

METHOD FOR THE DETECTION OF A THERMAL OVERLOAD SITUATION IN A HAND-HELD POWER TOOL

PROCÉDÉ DE DÉTECTION D'UNE SITUATION DE SURCHARGE THERMIQUE POUR UN OUTIL À MAIN ÉLECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.01.2008 DE 102008003786**

(43) Veröffentlichungstag der Anmeldung:
**22.09.2010 Patentblatt 2010/38**

(73) Patentinhaber: **Robert Bosch GmbH**
**70442 Stuttgart (DE)**

(72) Erfinder: **ROEHM, Heiko**
**70176 Stuttgart (DE)**

(56) Entgegenhaltungen:
**EP-A- 1 768 238          DE-A1-102005 010 129**
**JP-A- 2003 220 576        US-A- 4 430 681**
**US-A1- 2003 141 767**

**Beschreibung**

Die Erfindung bezieht sich auf ein Verfahren zur Detektion einer thermischen Überlastsituation bei einem Elektrohandwerkzeug nach dem Oberbegriff des Anspruches 1.

Stand der Technik

In der DE 10 2005 038 225 A1 wird ein Verfahren zur Detektion einer Überlastsituation bei einem Elektrohandwerkzeug beschrieben. Bei derartigen Elektrohandwerkzeugen, insbesondere akkubetriebenen Elektrohandwerkzeugen wie z.B. Akkuschrauber oder Akkubohrhämmer besteht die Gefahr, dass im Falle einer Überlastung der Motor blockiert, wobei in dieser Situation die höchstmöglichen Ströme fließen, die bei akkubetriebenen Elektrohandwerkzeugen vom Akkupack abgegeben werden können. Die hohen Ströme haben eine Überhitzung zur Folge, zugleich ist auf Grund des stillstehenden Motors die Kühlung stillgelegt, so dass im Falle des Fortbestehens dieses Zustandes innerhalb sehr kurzer Zeit die Gefahr eines thermischen Versagens einer oder mehrerer beteiligter Komponenten wie z.B. Verbindungsleitungen, des Elektromotors, Lötverbindungen oder dergleichen besteht. Die Gefahr einer thermischen Überhitzung besteht auch für den Fall, dass der Elektromotor ohne ausreichende Abkühlphasen mehrmals hintereinander den blockierten Zustand einnimmt.

Um eine Überlastsituation rechtzeitig zu erkennen und ein thermisches Versagen zu vermeiden, wird gemäß der DE 10 2005 038 225 A1 fortlaufend der Betriebsstrom gemessen und mit einem abgespeicherten Grenzstrom verglichen, wobei auf eine thermische Überlastung des Elektrowerkzeuges geschlossen wird, falls die aus mehreren Zyklen aufsummierten und gewichtete Differenz des gemessenen Betriebsstroms und des abgespeicherten Stromgrenzwerts einen Referenzwert überschreitet Daraufhin wird der Stromkreis, welcher den Elektromotor mit Strom versorgt, durch ein Signal einer Überwachungsvorrichtung unterbrochen. Der Elektromotor ist außer Funktion gesetzt, ein Überhitzung wird wirksam vermieden.

Aus DE10 2005 010 129 ist eine Schaltungsanordnung mit Mitteln zur Überwachung der Temperatur der Schaltungsanordnung bekannt, wobei das Mittel zur Überwachung bei Erreichen einer Grenztemperatur, die Reduzierung der Leistung der Last mit Hilfe eines Leistungsbauteils, insbesondere durch Reduzierung des durch das Leistungsbauteil fließenden Laststroms, bewirkt.

Offenbarung der Erfindung

Der Erfindung liegt die Aufgabe zugrunde, einen thermisch bedingten Ausfall eines Elelctrohandwerkzeugs zu vermeiden, wobei die Leistungsfähigkeit des Werkzeugs so wenig wie möglich eingeschränkt werden soll.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren zur Detektion einer thermischen Überlastsituation bei einem Handwerkzeug ist insbesondere auf Akku-Handwerkzeuge anwendbar, beispielsweise Akku-Schrauber, Akku-Bohrschrauber, Akku-Kreissägen, Akku-Sticksägen, Akku-Hobel, Akku-Bohrhämmer oder Akku-Schlagbohrmaschinen. Darüber hinaus kommt aber auch eine Anwendung auf Elektrohandwerkzeuge in Betracht, die direkt an das Stromnetz angeschlossen werden. Das Elektrohandwerkzeug weist als Antrieb einen Elektromotor auf, bei dem im Falle eines Blockierens die Gefahr einer Überhitzung besteht. Die Temperatur bzw eine mit der Temperatur eines Bauteils des Elektrohandwerkzeugs korrelierende Zustandsgröße des Elektromotors wird während des Betriebes gemessen, wobei im Falle einer Überschreitung einer Referenzgröße auf eine thermisch erhöhte Belastung geschlossen wird. Daraufhin wird ein reduzierter Übergangsbetrieb aktiviert, in welchem der Stromfluss im Stromkreis, der den Elektromotor versorgt, moduliert wird, so dass der weitere Temperaturanstieg gestoppt oder zumindest gebremst wird. Dadurch wird noch vor Erreichen eines thermischen Limits, bei dem eine Überlastung mit einhergehender Zerstörung von Bauteilen besteht, eine Maßnahme getroffen, die zur Folge hat, dass der weitere Temperaturanstieg zumindest gedämpft wird.

Für den Anwender hat dies den Vorteil, dass der Elektromotor nicht abgeschaltet wird, sondern in einem reduzierten Umfang weiter betrieben wird. Laufende Arbeiten können zumindest für eine gewisse Dauer mit dem Elektrohandwerkzeug fortgeführt werden, eine Unterbrechung der Arbeiten ist nicht zwingend erforderlich.

Ein weiterer Vorteil liegt darin, dass die reduzierte Leistung des Elektromotors vom Anwender bemerkt wird, so dass dieser entsprechende Maßnahmen ergreifen kann, die zu einer Abkühlung führen, beispielsweise durch Reduzierung der mechanischen Belastung oder durch manuelles Abschalten des Elektromotors, das aber im Unterschied zu einem automatischen Abschalten in geordneter Weise durchgeführt werden kann.

Sofern der Stromkreis vom Anwender nicht manuell unterbrochen wird, kann der reduzierte Übergangsbetrieb so lange fortgeführt werden, bis die Temperatur im Elektrohandwerkzeug wieder unter eine vorgegebene Grenze abgesunken ist und somit der Zustand der erhöhten thermischen Belastung nicht länger fortbesteht. Daraufhin kann automatisch oder durch manuellen Eingriff wieder in den normalen Betriebszustand zurückgekehrt werden, in welchem der Elektromotor seine Sollleistung abgibt.

Die Dauer der Übergangsphase kann variabel gestaltet werden, wobei über eine fortlaufende Messung zumindest einer Zustandsgröße, die mit der Temperatur im Elektrohandwerkzeug bzw. eines dort vorhandenen Bauteils korreliert, die Gesamtdauer des reduzierten Übergangsbetriebs festgelegt werden kann. Grundsätzlich ist es aber auch möglich, die Dauer des Übergangsbetriebs unabhängig von Messwerten zu gestalten, beispielsweise durch Festlegen einer bestimmten Anzahl von Zyklen mit Phasen höheren und reduzierten Stromflusses während des Übergangsbetriebs. So ist es insbesondere zweckmäßig, im Übergangsbetrieb zumindest eine Phase höheren Stromflusses vorzusehen, auf die eine Phase reduzierten Stromflusses folgt. Nach Ablauf dieser zwei Phasen wird wieder in den normalen Betriebszustand zurückgekehrt. Gegebenenfalls können aber auch mehrere Zyklen mit aufeinander folgenden Phasen höheren und reduzierten Stromflusses während des Übergangsbetriebes durchgeführt werden. Die jeweilige Dauer der Phasen kann, wie nachfolgend noch beschrieben wird, von verschiedenen Einflussgrößen abhängen, unter anderem von der Temperatur.

Für die Festlegung der Stromimpulsdauer und die Stromimpulshöhe sowohl für die Phase höheren Stromflusses als auch für die Phase reduzierten Stromflusses können eine Reihe von Kriterien zur Anwendung kommen. Vorteilhafterweise wird im Übergangsbetrieb zunächst eine Phase höheren Stromflusses durchgeführt, auf die eine Phase reduzierten Stromflusses folgt. Die Stromimpulshöhe während der Phase höheren Stromflusses kann auf einen konstanten Wert gesetzt werden, beispielsweise auf die Höhe des Betriebsstromes, auf den Wert des Umschaltstromes, der unmittelbar im Zeitpunkt des Umschaltens vom regulären Betrieb in den Übergangsbetrieb herrscht, oder auf einen sonstigen Stromwert, der auch niedriger liegen kann als der reguläre Betriebsstrom. Möglich ist auch eine Abhängigkeit der Stromimpulshöhe während der Phase höheren Stromflusses von der Phasendauer der Phase reduzierten Stromflusses. In diesem Fall kann bei längerer Phasendauer während der reduzierten Phase ein höherer Strom während der Phase erhöhten Stromflusses gewählt werden.

Für die Festlegung der Stromimpulsdauer während der Phase höheren Stromflusses können verschiedene Kriterien angewandt werden. Vorteilhafterweise wird die Stromimpulsdauer als Funktion des Umschaltstroms bestimmt, der vor der Umschaltung in den Übergangsbetrieb fließt. Beispielsweise verhält sich die Stromimpulsdauer reziprok zum Umschaltstrom, so dass bei einem hohen Umschaltstrom eine kürzere Impulsphase als bei einem niedrigeren Umschaltstrom eingestellt wird, wodurch der stärkeren Erwärmung der elektrischen Bauteile durch den höheren Umschaltstrom Rechnung getragen wird. Zusätzlich kann eine exponentielle Abhängigkeit vom Umschaltstrom gewählt werden, wobei der gerätespezifische Exponent der Exponentialfunktion vorteilhafterweise Werte zwischen 1 und 3 besitzt und beispielsweise umso größer gewählt werden kann, je höher die thermische Belastung des Elektrowerkzeugs ist. Da die Stromimpulsdauer im umgekehrten Verhältnis zum Stromwert steht, hat ein höherer Exponent eine entsprechend kürzere Stromimpulsdauer zur Folge, so dass die Phase höheren Stromflusses während des Übergangsbetriebs entsprechend kürzer dauert.

Auch die Stromimpulshöhe und -dauer während der Phase des reduzierten Stromflusses, die auf die Phase des höheren Stromflusses folgt, kann anhand verschiedener Kriterien eingestellt werden. Analog zur Stromimpulsdauer in der Phase erhöhten Stromflusses wird auch eine Abhängigkeit der Stromimpulsdauer während der Phase reduzierten Stromflusses von dem Wert des Umschaltstroms im Zeitpunkt des Wechsels vom regulären Betrieb zum Übergangsbetrieb gewählt. Hierbei hat es sich als zweckmäßig erwiesen, mit steigendem Umschaltstrom auch eine längere Stromimpulsdauer während der Phase reduzierten Stromflusses einzustellen, so dass die mit steigendem Strom während des regulären Betriebs ansteigende Temperatur durch eine längere Ruhephase während des Übergangsbetriebs kompensiert wird. Die Stromimpulshöhe während der Phase reduzierten Stromflusses wird zweckmäßigerweise auf einen Wert begrenzt, der unterhalb des Grenzstroms liegt, der als Schwellenwert für den Übergang vom Regulären Betrieb in den Übergangsbetrieb herangezogen wird. Die Stromimpulshöhe liegt hierbei entweder auf einem Wert größer Null, so dass der Elektromotor des Elektrohandwerkzeugs mit deutlich reduzierter Leistung weiter betrieben werden kann, oder aber, gemäß einer weiteren Ausführung, bei Null, was einer Abschaltung des Elektromotors während der reduzierten Phase gleichkommt. In beiden Fällen, also sowohl bei reduziertem Stromfluss als auch bei komplett abgeschaltetem Stromfluss, kann die Temperatur im Elektrohandwerkzeug bis zum Unterschreiten der Grenztemperatur absinken.

Die Dauer der Stromimpulse sowohl während der Phase höheren Stromflusses als auch während der Phase reduzierten Stromflusses kann außerdem temperaturabhängig eingestellt werden. Zweckmäßigerweise wird hierzu der Temperaturgradient herangezogen, der unmittelbar vor dem Umschalten in den Übergangsbetrieb herrscht. Hierfür können beispielsweise zwei aufeinander folgende Temperaturen bestimmt werden, wobei die Differenz der Temperaturwerte vor Beginn des Übergangsbetriebes für die Stromimpulsdauer für die Phase höheren Stromflusses und/oder der Phase reduzierten Stromflusses bestimmend ist. Hierbei ist es zweckmäßig, dass bei einem ansteigenden und verhältnismäßig großen Temperaturgradienten die Stromimpulsdauer während der Phase höheren Stromflusses kleiner und die Stromimpulsdauer während der Phase reduzierten Stromflusses größer eingestellt wird. Der ansteigende Temperaturgradient hat eine zunehmende Erwärmung zur Folge, der über eine entsprechende Einstellung der Stromimpulsdauer während der Phasen erhöhten und reduzierten Stromflusses Rechnung getragen wird.

Grundsätzlich reicht es aus, als mit der Temperatur eines Bauteils korrelierende Zustandsgröße den aktuellen Betriebsstrom zu messen und mit einem abgespeicherten Grenzstrom zu vergleichen, wobei aus der Differenz auf eine thermische Überlastung geschlossen wird. Dies stellt eine vorausschauende Vorgehensweise dar, weil bereits Abhilfemaßnahmen, insbesondere die Umschaltung in den Übergangsbetrieb getroffen werden können, noch bevor ein kritischer Temperaturwert erreicht wird.

Vorteilhafterweise wird die Temperatur mindestens einer temperaturkritischen Komponente im Elektrohandwerkzeug auch während des Übergangsbetriebs fortlaufend gemessen. Überschreitet trotz des reduzierten Stromflusses im Übergangsbetrieb die temperaturkritische Komponente eine kritische Temperatur, so wird der Übergangsbetrieb durch Trennen des Stromflusses abgebrochen.

Der Übergangsbetrieb wird regulär beendet, wenn entweder die festgelegten Phasen erhöhten und reduzierten Stromflusses durchlaufen worden sind oder, gemäß einer alternativen Ausführung, wenn im Falle kontinuierlich aufeinander folgender Phasen erhöhten und reduzierten Stromflusses ein Abbruchkriterium erfüllt ist, insbesondere die Temperatur unter einen Grenzwert absinkt.

Weitere Vorteile und zweckmäßige Ausführungen sind den weiteren Ansprüchen, der Figurenbeschreibung und den Zeichnungen zu entnehmen. Es zeigen:

Fig. 1   ein symbolisch dargestelltes Ausführungsbeispiel eines Handwerkzeugs mit einer Überwachungsvorrichtung zur Detektion einer thermischen Überlastsituation und zur Überführung in einen Übergangsbetrieb reduzierter elektrischer Leistung,

Fig. 2   ein Diagramm mit einer Darstellung des Stromflusses in Abhängigkeit von der Zeit während des Übergangsbetriebs.

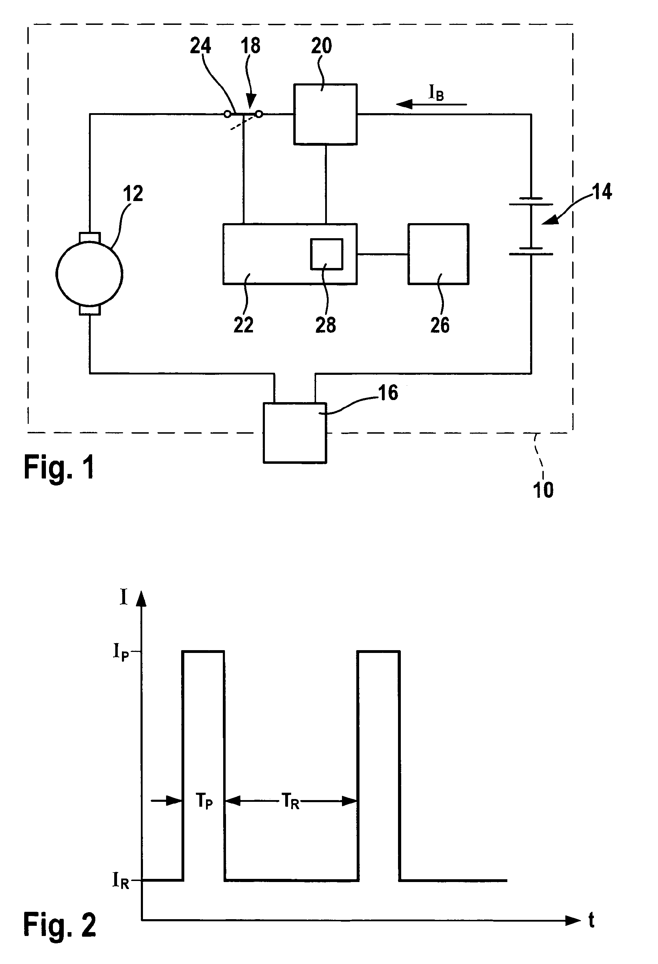

Das in Fig. 1 dargestellte Elektrohandwerkzeug 10 weist als Antrieb einen Elektromotor 12 auf, der von einem Akkupack 14 gespeist wird. In dem Stromkreis zwischen Akkupack 14 und Elektromotor 12 befindet sich ein Bedienelement 16, über das der Anwender den Stromkreis öffnen und schließen kann. Des Weiteren sind im Stromkreis eine Unterbrechungsvorrichtung 18, die einen Schalter 24 umfasst, sowie eine Strommesseinrichtung 20 angeordnet. Bei geschlossenem Stromkreis fließt ein Betriebsstrom $I_B$.

Die Unterbrechungsvorrichtung 18 wird von einer Überwachungsvorrichtung 22 angesteuert, der die Strommesseinrichtung 20 sowie eine Temperaturmesseinrichtung 26 zur Messung der Temperatur mindestens eines temperaturkritischen Bauteiles im Elektrohandwerkzeug 10 zugeordnet sind. Die Überwachungsvorrichtung 22 umfasst auch eine Regel- bzw. Steuereinheit 28, in der die Signalverarbeitung und -erzeugung stattfindet und im Übrigen auch Konstanten abgespeichert sind. Während des regulären Betriebs des Elektrohandwerkzeugs 10 ist der Stromkreis geschlossen, der Elektromotor 12 wird mit dem Betriebsstrom $I_B$ gespeist. Im regulären Betrieb wird fortlaufend über die Strommesseinrichtung 20 der aktuelle Betriebsstrom $I_B$ gemessen, außerdem wird über die Temperaturmesseinrichtung 26, die beispielsweise als NTC-Widerstandsmesseinheit ausgeführt ist, die Temperatur des mindestens einen temperaturkritischen Bauteiles im Elektrohandwerkzeug gemessen. Der gemessene, aktuelle Betriebsstrom $I_B$ wird mit einem abgespeicherten Grenzstrom $I_G$ verglichen, aus der Differenz wird gemäß

$$I_D = I_B - I_G$$

ein Differenzstrom $I_D$ gebildet. Die Strommessungen erfolgen mit hoher Taktfrequenz, es können beispielsweise 244 Strommessungen pro Sekunde durchgeführt werden. Die Strommessung hat außerdem den Vorteil, dass ohne Zeitverzögerung die sich einstellende Temperatur ermittelt werden kann. Dies erfolgt in vorausschauender Weise dadurch, dass aus der Differenz $I_D$ zwischen Betriebsstrom $I_B$ und Grenzstrom $I_G$ auf eine thermische Überlastung des Elektrohandwerkzeugs geschlossen wird, und zwar noch bevor die Temperatur einen kritischen Wert erreicht.

Liegt der gemessene Betriebsstrom $I_B$ über dem gespeicherten Grenzstrom $I_G$, der unterhalb des maximal zulässigen Dauerstroms liegt, so fließt der Differenzstrom $I_D$ in eine Summenformel gemäß

$$\Sigma(I_D)^n \leq z(T_0) \cdot m$$

ein. Die einzelnen Werte des Differenzstromes $I_D$ werden mit einem Exponenten n potenziert, der geräteabhängig Werte zwischen 1 und 3 besitzt. Die potenzierten Differenzströme werden aufsummiert, wobei ein regulärer Betrieb des Elektrohandwerkzeugs so lange aufrechterhalten bleibt, wie die vorgenannte Ungleichung erfüllt ist. Hierbei werden die aufsummierten Werte des potenzierten Differenzstromes mit einem system- und temperaturabhängigen Faktor $z(T_0)$ verglichen, der mit einem Faktor m multipliziert wird, welcher die Messwerte pro Sekunde angibt, also beispielsweise 244 Messungen pro Sekunde. Mit $T_0$ wird die Ausgangstemperatur bezeichnet, beispielsweise 20°.

Der Faktor $z(T_0)$ kann aus der Beziehung

$$z(T_0) = z_s \cdot z_T(T_0)$$

berechnet werden, wobei mit $z_s$ ein systemabhängiger Faktor und mit $Z_T(T_0)$ eine Temperaturkompensation bezeichnet wird, die gemäß

$$0 \leq z_T(T_0) \leq 1$$

Werte zwischen 0 und 1 einnimmt. $z_T(T_0)$ liegt bei 0, falls beim Einschalten bereits die zulässige Maximaltemperatur erreicht worden ist. Der Wert für $z_T(T_0)$ liegt bei 1, falls beim Einschalten ein Temperaturniveau herrscht, bei dem $z_s$ definiert worden ist, bei dem es sich um einen systemabhängigen, konstanten Faktor handelt.

Der Umschaltzeitpunkt für die Umschaltung vom regulären Betrieb in den Übergangsbetrieb ist erreicht, wenn die Summenbedingung nicht mehr erreicht ist, also die aufsummierten Potenzwerte des Differenzstroms $I_D$ größer sind als das Produkt aus dem system- und temperaturabhängigen Faktor $z(T_0)$ und der Messanzahl m. In diesem Fall wird in den Übergangsbetrieb umgeschaltet, bei dem der Elektromotor nur noch mit reduzierter Leistung betrieben wird und demzufolge auch der weitere Temperaturanstieg zumindest gebremst, zweckmäßigerweise aber umgekehrt wird.

Der Übergangsbetrieb ist durch eine Phase höheren Stromflusses und ein darauf folgende Phase reduzierten Stromflusses gekennzeichnet, wobei auch in der Phase höheren Stromflusses zweckmäßigerweise nur ein Strom fließt, der kleiner ist als der Grenzstrom $I_G$. Es können mehrere Zyklen mit jeweils einer Phase höheren und niedrigeren Stromflusses während des Übergangsbetriebs aufeinander folgen. Die Anzahl der Zyklen wird entweder vorab festgelegt oder es werden bis zum Erreichen eines Abbruchkriteriums, beispielsweise das Absinken unter eine Grenztemperatur, fortlaufend Zyklen mit Stromimpulsen höheren und geringeren Stromflusses durchgeführt.

In Fig. 2 ist ein Strom-Zeit-Diagramm I(t) dargestellt, das den idealisierten Stromverlauf während des Übergangsbetriebs zeigt. Zu erkennen sind einzelne, rechteckförmige Stromimpulse mit einer Stromimpulshöhe $I_P$, die die Phasen höheren Stromflusses kennzeichnen, wobei die Stromimpulshöhe $I_P$ den Wert des regulären Betriebsstromes einnehmen kann, ggf. aber auch darunter liegt. In jedem Fall ist der Wert $I_P$ aber auf einen Maximalwert begrenzt.

Auf die Phase höheren Stromflusses mit den Stromimpulsen $I_P$ folgt eine Phase niedrigeren Stromflusses mit einer Stromimpulshöhe $I_R$, wobei auch $I_R$ einen Wert größer Null einnimmt, jedoch erheblich unterhalb von $I_P$ liegt. Gegebenenfalls wird $I_R$ auf Null gesetzt.

Die Stromimpulsdauer $T_P$ während der Phase höheren Stromflusses wird gemäß der Beziehung

$$T_P(I_{\ddot{U}}) = \frac{k}{(I_{\ddot{U}} - I_G)^n}$$

ermittelt. Hierin bezeichnet k einen systemabhängigen Parameter, $I_{\ddot{U}}$ den Umschaltstrom, der unmittelbar vor dem Umschalten in den Übergangsbetrieb herrscht, $I_G$ den Grenzstrom, der als fester Wert abgespeichert ist, und n den systemabhängigen Exponenten mit Werten zwischen 1 und 3.

Die Stromimpulsdauer $T_R$ während der Phase reduzierten Stromflusses wird als Funktion des Umschaltstroms $I_{\ddot{U}}$ und des Grenzstroms $I_G$ gemäß der Beziehung

$$T_R(I_{\ddot{U}}) = f \cdot (I_{\ddot{U}} - I_G)^n$$

ermittelt, wobei mit f ein systemabhängiger Faktor bezeichnet ist.

Die Stromimpulsdauer während der Phase höheren Stromflusses sowie die Stromimpulsdauer $T_R$ während der Phase reduzierten Stromflusses kann temperaturabhängig eingestellt werden. Hierfür wird der Temperaturgradient $\Delta T$ unmittelbar vor dem Umschalten in den Übergangsbetrieb bestimmt, indem zwei aufeinander folgende Temperaturwerte $T_{\ddot{U}}$ und $T_{\ddot{U}-1}$ gemäß $\Delta T = T_{\ddot{U}} - T_{\ddot{U}-1}$ voneinander subtrahiert werden, wobei $T_{\ddot{U}}$ die Temperatur im Umschaltzeitpunkt und $T_{\ddot{U}-1}$ die Temperatur unmittelbar im davor liegenden Messzeitpunkt bezeichnet. Der Temperaturgradient $\Delta T$ hat Einfluss auf die systemabhängigen Faktoren k und f zur Berechnung der Stromimpulsdauer $T_P$ bzw. $T_R$ während der Phase höheren und niedrigeren Stromflusses im Übergangsbetrieb. Bei einem verhältnismäßig großen sowie ansteigenden Temperaturgradienten $\Delta T$ wird die Stromimpulsdauer $T_P$ während der Phase höheren Stromflusses kleiner und während der Phase reduzierten Stromflusses größer eingestellt, indem der systemabhängige Faktor k für die Berechnung der Pulsdauer $T_P$ kleiner und der systemabhängige Faktor f für die Berechnung der Pulsdauer $T_R$ größer gewählt wird.

Sowohl die Strommessung als auch die Temperaturmessung wird im regulären Betrieb und auch im Übergangsbetrieb fortlaufend durchgeführt. Übersteigt während des Übergangsbetriebs die Temperatur der mindestens einen temperaturkritischen Komponente eine Grenztemperatur, so wird der Übergangsbetrieb durch Trennen des Stromflusses abgebrochen. Sinkt dagegen die Temperatur unter einen Schwellenwert, kann in den regulären Betrieb zurückgekehrt werden.

**Patentansprüche**

1. Verfahren zur Detektion einer thermischen Überlastsituation bei einem Elektrohandwerkzeug (10), insbesondere eines Akku-Handwerkzeugs, das als Antrieb einen Elektromotor (12) aufweist, wobei die Temperatur oder eine mit der Temperatur eines Bauteils des Elektrohandwerkzeugs (10) korrelierende Zustandsgröße des Elektromotors (12) gemessen und bei Überschreitung einer Referenzgröße auf eine thermisch erhöhte Belastung geschlossen wird, wobei im Falle einer thermisch erhöhten Belastung ein reduzierter Übergangsbetrieb aktiviert wird, in welchem der Stromfluss im Stromkreis moduliert wird, und im Übergangsbctrieb mindestens eine Phase höheren Stromflusses und eine Phase reduzierten Stromflusses aufeinanderfolgen, **dadurch gekennzeichnet, dass** die Stromimpulsdauer ($T_P$) während der Phase höheren Stromflusses als Funktion des Umschaltstroms ($I_0$) vor dem Umschalten in den Übergangsbetrieb bestimmt wird.

2. Verfahren nach Anspruch 1, **dadurch gekennzeichnet, dass** der aktuelle Betriebsstrom ($I_B$) gemessen und mit einem abgespeicherten Grenzstrom ($I_G$) verglichen wird, wobei aus der Differenz ($I_D$) zwischen Betriebsstrom ($I_B$) und Grenzstrom ($I_C$) auf eine thermische Überlastung des Elektrohandwerkzeugs geschlossen wird.

3. Verfahren nach einem der vorhergehenden Ansprüche, **dadurch gekennzeichnet, dass** die Stromimpulsdauer ($T_P$) bei höherem Umschaltstrom ($I_{\ddot{U}}$) kleiner und bei geringerem Umschaltstrom ($I_{\ddot{U}}$) höher eingestellt wird.

4. Verfahren nach einem der vorhergehenden Ansprüche, **dadurch gekennzeichnet, dass** die Stromimpulsdauer ($T_P$) gemäß der Beziehung

$$T_P(I_{\ddot{U}}) = \frac{k}{(I_{\ddot{U}} - I_G)^n}$$

ermittelt wird, wobei

k einen systemabhängigen Parameter
$I_{\ddot{U}}$ den Umschaltstroms vor dem Umschalten in den Übergangsbetfieb
$I_G$ den Grenzstrom
n einen Exponenten

bezeichnet.

5. Verfahren nach Anspruch 4, **dadurch gekennzeichnet, dass** der Exponent (n) einen Wert zwischen eins und drei besitzt.

6. Verfahren nach einem der vorhergehenden Ansprüche, **dadurch gekennzeichnet dass** die Stromimpulshöhe ($I_P$) auf den Wert des Umschaltstroms ($I_{\ddot{U}}$) begrenzt wird.

7. Verfahren nach einem der vorhergehenden Ansprüche, **dadurch gekennzeichnet, dass** die Stromimpulshöhe ($I_P$) während der Phase höheren Stromflusses als konstanter Wert vorgegeben wird.

8. Verfahren nach einem der vorhergehenden Ansprüche, **dadurch gekennzeichnet, dass** die Stromimpulshähe ($I_P$) während der Phase höheren Stromflusses als Funktion der stromarmen bzw. stromfreien Phasendauer bestimmt wird.

9. Verfahren nach einem der vorhergehenden Ansprüche, **dadurch gekennzeichnet, dass** die Stromimpulsdauer ($T_R$) während der Phase reduzierten Stromflusses als konstanter Wert vorgegeben wird.

10. Verfahren nach einem der vorhergehenden Ansprüche, **dadurch gekennzeichnet, dass** die Stromimpulsdauer ($T_R$) während der Phase reduzierten Stromflusses als Funktion des Umschaltstroms ($I_{\ddot{U}}$) bestimmt wird.

11. Verfahren nach Anspruch 10, **dadurch gekennzeichnet, dass** die Stromimpulsdauer ($T_R$) als Funktion des Umschaltstroms ($I_{\ddot{U}}$) und des Grenzstroms ($I_G$) gemäß der Beziehung

$$T_R(I_{\ddot{U}}) = f \cdot (I_{\ddot{U}} - I_G)^n$$

bestimmt wird, wobei

f einen systemabhängigen Faktor

bezeichnet.

12. Verfahren nach einem der vorhergehenden Ansprüche, **dadurch gekennzeichnet, dass** die Stromimpulshöhe ($I_R$) während der Phase reduzierten Stromflusses unterhalb des Grenzstroms ($I_G$) liegt

13. Verfahren nach einem der vorhergehenden Ansprüche, **dadurch gekennzeichnet, dass** die Stromimpulshöhe ($I_R$) während der Phase reduzierten Stromflusses Null beträgt.

14. Verfahren nach einem der vorhergehenden Ansprüche, **dadurch gekennzeichnet, dass** die Stromimpulsdauer ($T_P$) während der Phase höheren Stromflusses und/oder die Stromimpulsdauer ($T_R$) während der Phase reduzierten Stromflusses temperaturabhängig eingestellt werden.

**15.** Verfahren nach Anspruch 14, **dadurch gekennzeichnet, dass** der Temperaturgradient ($\Lambda T$) vor dem Umschalten in den Übergangsbetrieb bestimmt und zur Berechnung der Stromimpulsdauer ($T_P$, $T_R$) herangezogen wird.

**16.** Verfahren nach Anspruch 15, **dadurch gekennzeichnet, dass** mit steigendem Temperaturgradienten die Stromimpulsdauer ($T_P$) während der Phase höheren Stromflusses kleiner und die Stromimpulsdauer ($T_R$) während der Phase reduzierten Stromflusses größer eingestellt wird.

**17.** Verfahren nach einem der vorhergehenden Ansprüche, **dadurch gekennzeichnet, dass** als Zustandsgröße der Betriebsstrom ($I_B$) des Elektromotors (12) gemessen und bei Überschreitung einer Referenzgröße der reduzierte Übergangsbetrieb aktiviert wird.

**18.** Verfahren nach einem der vorhergehenden Ansprüche, **dadurch gekennzeichnet, dass** die Temperatur mindestens einer temperaturkritischen Komponente gemessen und bei Überschreitung einer Grenztemperatur der Übergangsbetrieb durch Trennen des Stromflusses abgebrochen wird.

**19.** Überwachungsvorrichtung zur Durchführung eines Verfahrens zur Detektion einer thermischen Überlastsituation bei einem Elektrohandwerkzeug (10), insbesondere eines Akku-Handwerkzeugs, das als Antrieb einen Elektromotor (12) aufweist, wobei die Temperatur oder eine mit der Temperatur eines Bauteils des Elektrohandwerkzeugs (10) korrelierende Zustandsgröße des Elektromotors (12) gemessen und bei Überschreitung einer Referenzgröße auf eine thermisch erhöhte Belastung geschlossen wird, wobei im Falle einer thermisch erhöhten Belastung ein reduzierter Übergangsbetrieb aktiviert wird, in welchem der Stromfluss im Stromkreis moduliert wird, und im Übergangsbetrieb mindestens eine Phase höheren Stromflusses und eine Phase reduzierten Stromflusses aufeinanderfolgen, **dadurch gekennzeichnet, dass** die Stromimpulsdauer ($T_P$) während der Phase höheren Stromflusses als Funktion des Umschaltstroms ($I_{\ddot{U}}$) vor dem Umschalten in den Übergangsbetrieb bestimmt wird.

**20.** Elektrohandwerkzeug mit einer Überwachungsvorrichtung nach Anspruch 19.

**Claims**

**1.** Method for detection of a thermal overload situation in an electrical handheld tool (10), in particular a handheld tool with a rechargeable battery, which has an electric motor (12) as the drive, wherein the temperature or a state variable of the electric motor (12) which is correlated with the temperature of a component in the electrical handheld tool (10) is measured, and a thermally increased load is deduced if a reference variable is exceeded, wherein a reduced transitional mode is activated when a thermally increased load occurs, in which the current flow in the circuit is modulated, and at least one phase with a higher current flow and one phase with a reduced current flow follow one another in the transitional mode, **characterized in that** the current pulse duration ($T_P$) during the phase of higher current flow is determined as a function of the switching current ($I_{\ddot{U}}$) before switching to the transitional mode.

**2.** Method according to Claim 1, **characterized in that** the instantaneous operating current ($I_B$) is measured and is compared with a stored limit current ($I_G$), wherein thermal overloading of the electrical handheld tool is deduced from the difference ($I_D$) between the operating current ($I_B$) and the limit current ($I_G$).

**3.** Method according to one of the preceding claims, **characterized in that** the current pulse duration ($T_P$) at the higher switching current ($I_{\ddot{U}}$) is set to be shorter and at the lower switching current ($I_{\ddot{U}}$) is set to be greater.

**4.** Method according to one of the preceding claims, **characterized in that** the current pulse duration ($T_P$) is determined using the relationship:

$$T_P(I_{\ddot{U}}) = \frac{k}{(I_{\ddot{U}} - I_G)^n}$$

wherein:

k is a system-dependent parameter
$I_{\ddot{U}}$ is the switching current before switching to the transitional mode
$I_G$ is the limit current
n is an exponent.

**5.** Method according to Claim 4, **characterized in that** the exponent (n) has a value between one and three.

**6.** Method according to one of the preceding claims, **characterized in that** the current pulse level ($I_P$) is limited to the value of the switching current ($I_{\ddot{U}}$).

**7.** Method according to one of the preceding claims, **characterized in that** the current pulse level ($I_P$)

during the phase of higher current flow is predetermined as a constant value.

8. Method according to one of the preceding claims, **characterized in that** the current pulse level ($I_P$) during the phase of higher current flow is determined as a function of the phase duration in which there is little or no current.

9. Method according to one of the preceding claims, **characterized in that** the current pulse duration ($T_R$) during the phase of reduced current flow is predetermined as a constant value.

10. Method according to one of the preceding claims, **characterized in that** the current pulse duration ($T_R$) during the phase of reduced current flow is determined as a function of the switching current ($I_{\ddot{U}}$).

11. Method according to Claim 10, **characterized in that** the current pulse duration ($T_R$) is determined as a function of the switching current ($I_{\ddot{U}}$) and the limit current ($I_G$) using the relationship:

$$T_R(I_{\ddot{U}}) = f \cdot (I_{\ddot{U}} - I_G)^n$$

wherein

    f is a system-dependent factor.

12. Method according to one of the preceding claims, **characterized in that** the current pulse level ($I_R$) during the phase of reduced current flow is below the limit current ($I_G$).

13. Method according to one of the preceding claims, **characterized in that** the current pulse level ($I_R$) during the phase of reduced current flow is zero.

14. Method according to one of the preceding claims, **characterized in that** the current pulse duration ($T_P$) during the phase of higher current flow and/or the current pulse duration ($T_R$) during the phase of reduced current flow are/is set as a function of the temperature.

15. Method according to Claim 14, **characterized in that** the temperature gradient (AT) before switching to the transitional mode is determined and is used to calculate the current pulse durations ($T_p$, $T_R$).

16. Method according to Claim 15, **characterized in that**, as the temperature gradient rises, the current pulse duration ($T_P$) during the phase of higher current flow is set to be shorter, and the current pulse duration ($T_R$) during the phase of reduced current flow is set to be longer.

17. Method according to one of the preceding claims, **characterized in that** the operating current ($I_B$) of the electric motor (12) is measured as a state variable, and the reduced transitional mode is activated if a reference variable is exceeded.

18. Method according to one of the preceding claims, **characterized in that** the temperature of at least one temperature-critical component is measured and, if a limit temperature is exceeded, the transitional mode is terminated by disconnecting the current flow.

19. Monitoring apparatus for carrying out a method for detection of a thermal overload situation in an electrical handheld tool (10), in particular a handheld tool with a rechargeable battery, which has an electric motor (12) as the drive, wherein the temperature or a state variable of the electric motor (12) which is correlated with the temperature of a component in the electrical handheld tool (10) is measured, and a thermally increased load is deduced if a reference variable is exceeded, wherein a reduced transitional mode is activated when a thermally increased load occurs, in which the current flow in the circuit is modulated, and at least one phase with a higher current flow and one phase with a reduced current flow follow one another in the transitional mode, **characterized in that** the current pulse duration ($T_P$) during the phase of higher current flow is determined as a function of the switching current ($I_{\ddot{U}}$) before switching to the transitional mode.

20. Electrical handheld tool having a monitoring apparatus according to Claim 19.

**Revendications**

1. Procédé de détection d'une situation de surcharge thermique dans un outil électrique manuel (10), en particulier un outil manuel à accumulateur qui présente comme entraînement un moteur électrique (12), dans lequel :

    la température ou une grandeur d'état du moteur électrique (12) corrélée à la température d'un composant de l'outil manuel électrique (10) sont mesurées et, en cas de dépassement d'une grandeur de référence, il est conclu à une charge thermique accrue, et en cas de charge thermique accrue, un mode transitoire réduit dans lequel l'intensité du courant dans le circuit de courant est modulée est activé,
    au moins une phase de haute intensité de courant et une phase d'intensité réduite de courant se succédant dans le mode transitoire, **caractérisé en ce que** la durée ($T_P$) des impulsions de courant pendant la phase de haute intensité de courant est déterminée en fonction du courant de commutation ($I_Ü$) avant la commutation en mode transitoire.

2. Procédé selon la revendication 1, **caractérisé en ce que** le courant de service effectif ($I_B$) est mesuré et comparé à un courant limite ($I_G$) conservé en mémoire, une surcharge thermique de l'outil électrique manuel étant déterminée à partir de la différence ($I_D$) entre le courant de service ($I_B$) et le courant limite ($I_G$).

3. Procédé selon l'une des revendications précédentes, **caractérisé en ce que** la durée ($T_P$) des impulsions de courant est réglée à une valeur plus petite lorsque le courant de commutation ($I_Ü$) est élevé et à une valeur plus élevé lorsque le courant de commutation ($I_Ü$) est plus bas.

4. Procédé selon l'une des revendications précédentes, **caractérisé en ce que** la durée ($T_P$) des impulsions de courant est déterminée par l'équation:

$$T_P(I_ü) = \frac{k}{(I_ü - I_G)^n}$$

dans laquelle

k représente un paramètre dépendant du système,
$I_ü$ représente le courant de commutation avant la commutation en mode transitoire
$I_G$ représente le courant limite et
n représente un exposant.

5. Procédé selon la revendication 4, **caractérisé en ce que** l'exposant (n) prend une valeur entre 1 et 3.

6. Procédé selon l'une des revendications précédentes, **caractérisé en ce que** le niveau ($I_P$) des impulsions de courant est limité à la valeur du courant de commutation ($I_ü$).

7. Procédé selon l'une des revendications précédentes, **caractérisé en ce que** pendant la phase de haute intensité de courant, le niveau ($I_P$) des impulsions de courant est prédéterminé en tant que valeur constante.

8. Procédé selon l'une des revendications précédentes, **caractérisé en ce que** pendant la phase de haute intensité de courant, le niveau ($I_P$) des impulsions de courant est prédéterminé en fonction de la durée de la phase de faible courant ou sans courant.

9. Procédé selon l'une des revendications précédentes, **caractérisé en ce que** pendant la phase d'intensité réduite de courant, la durée ($T_R$) des impulsions de courant est prédéterminée en tant que valeur constante.

10. Procédé selon l'une des revendications précédentes, **caractérisé en ce que** pendant la phase d'intensité réduite de courant, la durée ($T_R$) des impulsions de courant est prédéterminée en fonction du courant de commutation ($I_ü$).

11. Procédé selon la revendication 10, **caractérisé en ce que** la durée ($T_R$) des impulsions de courant est déterminée en fonction du courant de commutation ($I_ü$) et du courant limite ($I_G$) par l'équation

$$T_R(I_G) = f \cdot (I_ü - I_G)^n$$

dans laquelle

f représente un facteur dépendant du système.

12. Procédé selon l'une des revendications précédentes, **caractérisé en ce que** pendant la phase d'intensité réduite de courant, le niveau ($I_R$) des impulsions de courant est situé en dessous du courant limite ($I_G$) .

13. Procédé selon l'une des revendications précédentes, **caractérisé en ce que** pendant la phase d'intensité réduite de courant, le niveau ($I_R$) des impulsions de courant vaut zéro.

14. Procédé selon l'une des revendications précédentes, **caractérisé en ce que** la durée ($T_P$) des impulsions de courant pendant la phase de haute intensité de courant et/ou la durée ($T_R$) des impulsions de courant pendant la phase d'intensité réduite du courant sont réglées en fonction de la température.

15. Procédé selon la revendication 14, **caractérisé en ce que** le gradient de température (^T) est déterminé avant la commutation en mode transitoire et est utilisé pour calculer la durée ($T_P$, $T_R$) des impulsions de courant.

16. Procédé selon la revendication 15, **caractérisé en ce que** lorsque le gradient de température augmente, la durée ($T_P$) des impulsions de courant pendant la phase de haute intensité de courant est réglée à une valeur plus petite et la durée ($T_R$) des impulsions de courant pendant la phase d'intensité réduite de courant est réglée à une valeur plus grande.

**17.** Procédé selon l'une des revendications précédentes, **caractérisé en ce que** comme grandeur d'état, on mesure le courant de service ($I_B$) du moteur électrique (12) et **en ce que** le mode transitoire réduit est activé lorsqu'une grandeur de référence est dépassée.

**18.** Procédé selon l'une des revendications précédentes, **caractérisé en ce que** la température d'au moins un composant à température critique est mesurée et **en ce que** lorsqu'une température limite est dépassée, le mode transitoire est interrompu par coupure du courant.

**19.** Dispositif de surveillance en vue de l'exécution d'un procédé de détection d'une situation de surcharge thermique d'un outil manuel électrique (10), en particulier d'un outil manuel à accumulateur qui présente comme entraînement un moteur électrique (12), dans lequel :

la température ou une grandeur d'état du moteur électrique (12) corrélée à la température d'un composant de l'outil manuel électrique (10) sont mesurées et, en cas de dépassement d'une grandeur de référence, il est conclu à une charge thermique accrue, et en cas de charge thermique accrue, un mode transitoire réduit dans lequel l'intensité du courant dans le circuit de courant est modulée est activé,
au moins une phase de haute intensité de courant et une phase d'intensité réduite de courant se succédant dans le mode transitoire,
**caractérisé en ce que**
la durée ($T_P$) des impulsions de courant pendant la phase de haute intensité de courant est déterminée en fonction du courant de commutation ($I_\ddot{U}$) avant la commutation en mode transitoire.

**20.** Outil électrique manuel doté d'un dispositif de surveillance selon la revendication 19.

Fig. 1

Fig. 2

**EP 2 229 307 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005038225 A1
- DE 102005010129